# EUROPÄISCHE PATENTSCHRIFT

(11) **EP 1 800 547 B1**
(45) Veröffentlichungstag und Bekanntmachung des Hinweises auf die Patenterteilung: **04.09.2013**
(21) Anmeldenummer: 06126158.2
(22) Anmeldetag: 14.12.2006
(51) Int. Cl.: A23L 1/0532, A23L 1/22

(54) **Gewürzmischung für Lebensmittel**
Mixture of condiments for food products
Mélange de condiments pour produits alimentaires

(30) Priorität: 20.12.2005 DE 102005060969; 23.08.2006 DE 102006039509
(43) Veröffentlichungstag der Anmeldung: 27.06.2007
(73) Patentinhaber: Wiberg GmbH, 5020 Salzburg (AT)
(72) Erfinder: Wiedmann, Jürgen, Dr., 55435 Gau-Algesheim (DE); Guder, Arne, 55118 Mainz (DE); Pommersheim, Rainer, Dr., 55116 Mainz (DE); Wendlinger, Günther, Dr., 83395 Freilassing (DE)
(74) Vertreter: Kruspig, Volkmar

(56) Entgegenhaltungen:
- WO-A-01/22834
- WO-A-02/43511
- WO-A-97/13416
- WO-A-98/15192
- US-A- 4 822 534
- US-A- 5 690 990
- US-A1- 2002 168 450

## Beschreibung

Die Erfindung betrifft eine verkapselte Gewürzmischung für Lebensmittel für den Einsatz bei der Herstellung von Fleisch- und Wurstwaren gemäß Patentanspruch 1.

Gewürzmischungen in unterschiedlichster Ausgestaltung gehören zum Stand der Technik. In Abhängigkeit von bestimmten farbgebenden Substanzen der Gewürze oder in den Gewürzmischungen enthaltend, tritt eine, teilweise gewünschte, andererseits aber auch unerwünschte Verfärbung von Lebensmitteln auf, die mit diesen Gewürzen behandelt bzw. durchsetzt werden.

Die Anreicherung von Nahrungsmitteln mit Zusätzen, wie Gewürzen, Vitaminen, Aromen, Konservierungsmitteln, Farbstoffen und so weiter ist eine in der Nahrungsmittelindustrie weit verbreitete Maßnahme. Die üblicherweise in pulverförmiger, zerkleinerter und/oder flüssiger Form vorliegenden Zusätze werden herkömmlicherweise bis zur Homogenität mit den Ausgangsnahrungsmitteln vermischt, wodurch das verpackungsfertige Endprodukt entsteht.

Es kann in der Nahrungsmittelindustrie aber auch erforderlich sein, die Zusätze in immobilisierter Form, beispielsweise in Form von Kapseln, Kügelchen oder Ähnlichem einzusetzen.

Dies ist beispielsweise dann der Fall, wenn empfindliche Zusätze, wie sauerstoff- und/oder feuchtigkeitsempfindliche Stoffe vor dem umgebenden Medium, wie einem in der Regel sauerstoffhaltigen und/oder feuchten Nahrungsmittel, geschützt werden sollen. Dadurch kann gewährleistet werden, daß die Zusätze bis zum Ende der Haltbarkeitsfrist der Lebensmittel den gesetzlichen Vorgaben entsprechen.

Durch den Einsatz immobilisierter Zusätze ist es auch möglich, dass der Zusatz, wie beispielsweise ein Aromastoff, erst beim eigentlichen Verzehr des Nahrungsmittels freigesetzt wird. Überdies können unangenehm schmeckende Zusätze, wie beispielsweise Vitamine oder bestimmte Öle, z.B. Fischöle, in konzentrierter Form zusammen mit schmackhaften Nahrungsmitteln eingenommen werden, ohne auf sonstige Präparate, wie beispielsweise Tabletten zurückzugreifen.

Zudem können bei der Herstellung von Kapseln, Kügelchen und so weiter selbst Stoffe von öliger Konsistenz einfach und hygienisch gehandhabt werden und leicht in den Produktionsprozess eines Nahrungsmittels eingebunden werden, indem die Kapseln, Kügelchen und so weiter dem Nahrungsmittel in der gewünschten Konzentration beigemischt und gleichmäßig darin verteilt werden.

Bekannt sind drei grundlegende Immobilisierungsarten. Zum einen kann eine Immobilisierung durch Kopplung oder Binden an Trägeroberflächen erfolgen. Ebenso bekannt ist die Immobilisierung durch Einschluss in Trägersubstanzen oder durch Einschluß in Mikrokapseln.

Beim Immobilisieren durch Kopplung oder Binden an Trägeroberflächen wird der zu immobilisierende Stoff chemisch oder physikalisch an eine vorhandene Oberfläche gebunden. Die Auswahl an für die Träger in Frage kommenden Materialien reicht von Keramiken über porösem Glas bis hin zu speziell präparierten Holzspänen. Ein klassisches Beispiel hierfür ist der Katalysator aus der Automobiltechnik, bei dem das Edelmetall, z.B. Platin auf einen Keramikträger aufgebracht und damit immobilisiert wird. Diese Methode eignet sich grundsätzlich nur zur Immobilisierung von Stoffen und weniger für lebende Organismen.

Lebende Zellen und Mikroorganismen werden üblicherweise zum Zweck der Immobilisierung in eine Matrix eingeschlossen. Dabei kommen vor allem Hydrogele zum Einsatz. Diese Immobilisate sind wegen ihrer meist unhandlichen Form, ihrer mangelnden Stabilität und des ungünstigen Volumenverhältnisses zwischen Trägersubstanz und immobilisiertem Material nur bedingt nutzbar.

In den zurückliegenden Jahren hat die Mikroverkapselung zunehmend an Bedeutung gewonnen. Im hier vorliegenden Sinn ist die Kapsel als Kugel zu verstehen, die in ihrem Inneren einen bestimmten Stoff oder ein Stoffgemenge einschließt.

Zur Herstellung von Mikrokapseln haben sich Verfahren durchgesetzt, bei denen die Herstellung und Beladung zeitversetzt erfolgen. Die Kapsel wird getrennt vom Wirkstoff erzeugt und anschließend damit beladen. Diese Verfahren werden überwiegend bei der Herstellung von Medikamenten benutzt.

Oft werden auch sogenannte Tauchverfahren, wie sie beispielsweise bei der Herstellung von Medikamenten oder Süßigkeiten bekannt sind, als Verkapselung bezeichnet, oder aber auch Sprühbeschichtungen, wie die in der chemischen oder pharmazeutischen Industrie verbreitet sind. Hierbei werden Feststoffe durch Eintauchen oder Besprühen mit einer Membran überzogen. Für spezielle Anwendungen werden häufig auch Stoffe durch eine chemische Fällung in Gelpartikel eingeschlossen.

Aus der Kosmetikindustrie sind für spezielle Anwendungen sogenannte Liposomen einsetzbar. Dies sind äußerst kleine Partikel mit Durchmessern unterhalb eines tausendstel Millimeters, in deren Inneren sich eine Wirksubstanz befindet. Sie entstehen in Flüssigkeiten durch Wechselwirkungen spezieller Moleküle, die die Wirkstoffpartikel umhüllen, ähnlich wie Seifen Schmutzpartikel beim Waschen einschließen und sie dadurch aus der Wäsche lösen.

Aus der DE 196 44 343 A1 ist eine geschmacksneutrale Mikrokapsel mit einem Durchmesser von einigen µm bekannt, die in einem Emulsionsprozess hergestellt wird und die als Lebensmittel oder Futterzusatz sowie als Transportsystem für Arzneimittel dienen kann. Bei dieser Kapsel werden Öle oder in diesem Öl lösliche Stoffe in einem Grundstoff, beispielsweise Alginat, emulgiert und daraus in einem weiteren Emulsionsprozess 0,5 bis 20 µm große Kapseln geformt, die anschließend in der Lebensmittel- oder Pharmaindustrie eingesetzt werden können.

Die US-PS 4,389,419 offenbart ein ähnliches Verfahren zur Verkapselung von Ölen und öllöslichen Substanzen. Hier wird eine Emulsion des Öls mit einem Grundstoff in einem ersten Schritt erzeugt. Allerdings werden in diesem Fall dem Grundstoff, nämlich Alginat, noch einige Füllstoffe beigemengt und die Kapseln durch Extrudieren durch eine Düse und Fällen in einem Fällbad geformt und nicht durch einen weiteren Emulsionsschritt.

Kapseln auf der Basis semipermeabler Membranen zur Immobilisierung von lebenden Zellen, bei der der Kapselkern aus einer einzigen Schicht eines Ply-l-Lysin / Alginatkomplexes umgeben ist, wurden beispielsweise von F. Lim und A. Sun in der Zeitschrift "Sience", Band 210, Seiten 908 bis 910, 1980, erläutert. Bei diesen Kapseln wird ein Austreten der Zellen aus dem Kapselkern verhindert. Die Membrankapsel eignet sich wegen ihrer relativ geringen mechanischen Stabilität allerdings nicht zum Einsatz in technischen Prozessen. Auch können darin keine Moleküle von der Größe eines Enzyms oder kleiner eingeschlossen werden, da die Membran hierfür zu durchlässig ist.

Gemäß der DE 43 12 970 A1 gehört eine Membrankapsel zum Stand der Technik, die auch zur Immobilisierung von Enzymen und Proteinen geeignet ist. Bei dieser Lösung ist der Kern, der das Immobilisat enthält, mit einer mehrlagigen Hülle umgeben, wobei jede dieser Lagen der gesamten Hülle eine gewisse Eigenschaft verleiht. Über die vorteilhafte Wahl der Hüllenpolymere kann die Durchlässigkeit der Membran so verringert werden, dass die Enzyme in der Kapsel bleiben, während die viel kleineren Substrate und Produkte die Membran passieren können.

Die US 5,690,990 betrifft ein Verfahren zum Verkapseln von Geschmacksstoffen auf der Basis einer kolloidalen Gelmatrix. Gemäß der dortigen Lehre können ganz unterschiedliche Geschmacksverstärker und Gewürze verkapselt werden, um diese dann in ein zu behandelndes Fleischprodukt einzubringen. Im Vordergrund steht dabei die Vermeidung einer Phasenseparation der Aromen oder Gewürze vor der eigentlichen Nutzung, d.h. der Injektion.

Die WO 97/13416 betrifft eine Mehrfachverkapselung von Gewürzen, die aus ganz unterschiedlichen Ausgangsbestandteilen, vorwiegend in gelöster Form bestehen.

Bei der US 2002/0168450 A1 steht das Schmelzen von gekapselten Lebensmittelzusatzstoffen im Bereich von 30° bis 80°C, vorzugsweise 40° bis 70°C im Vordergrund.

Problematisch bei den vorbekannten und oben kurz erläuterten Immobilisierungsmethoden ist, dass diese technisch sehr aufwendig sind, wobei durch die Materialauswahl in der Regel ein Einsatz für Lebensmittel kaum möglich wird. Letztendlich besitzen die Produkte gemäß bekannter Immobilisierung im getrockneten Zustand sensorisch unangenehme Eigenschaften.

Aus dem Vorgenannten ist es daher Aufgabe der Erfindung, eine Formulierung, d.h. eine Gewürzmischung für Lebensmittel, insbesondere für den Einsatz bei der Herstellung von Fleisch- und Wurstwaren anzugeben, die sicherstellt, daß die geschmacklichen und farblichen, auf die Gewürzkomponenten zurückzuführenden Eigenschaften auf das Mischungsprodukt beschränkt bleiben, wobei die gewürzrelevanten und/oder ernährungsphysiologisch wirksamen Komponenten erst beim Verzehr wahrgenommen bzw. freigesetzt werden.

Die Lösung der Aufgabe der Erfindung erfolgt durch eine verkapselte Gewürzmischung für Lebensmittel für den Einsatz bei der Herstellung von Fleisch- und Wurstwaren gemäß der Lehre nach Patentanspruch 1, wobei die Unteransprüche zweckmäßige Ausgestaltungen und Weiterbildungen darstellen.

Durch die verkapselte Form, in der die Gewürzmischung vorliegt, ist gewährleistet, dass eine Vermischung oder eine unerwünschte Wechselwirkung der Gewürze untereinander und mit dem umgebenden Medium im Lebensmittel weitestgehend unterbunden wird. Hierdurch ist es insbesondere möglich, verschiedenfarbige Gewürze einzusetzen, ohne dass eine Farbvermischung stattfindet, wodurch sich Produkte mit ansprechenden Farbeffekten realisieren lassen.

Beispielsweise kann mit einer Gewürzmischung in Form von farbigen Kügelchen, die ernährungsphysiologisch wertvolle Komponenten enthalten, der Verzehr entsprechender Produkte durch Kinder angeregt werden, wobei hier eine ansonsten bestehende Scheu zur Aufnahme derartiger Nahrungsmittel überwunden wird.

Es lassen sich demnach gemäß der Erfindung verschiedenste farbliche und sensorische Effekte im Endprodukt erzeugen, die über den üblichen Einsatzzweck von Gewürzen hinausgehen, wobei den Gewürzen eine über den geschmacklichen Aspekt des Produkts weitergehende Wirkung zufällt. Die angegebene Gewürzmischung mit ihrer Formulierung ist einfach und kostengünstig herzustellen und vermittelt beim Verzehr ein angenehmes Mundgefühl.

Die Gewürzmischung besteht erfindungsgemäß aus einer farbgebenden Gewürzkomponente, einer geschmacksgebenden Hilfskomponente und einer Füllstoffhilfskomponente, wobei die vorerwähnte Mischung kugelförmig verkapselt ist, um unerwünschte Wechselwirkungen von weiteren im Produkt enthaltenen Gewürzen und/oder dem Produkt selbst auszuschließen.

Die Füllstoffhilfskomponente erzeugt Volumen für eine optisch ansprechende Form und gleichzeitig ein angenehmes Mundgefühl. Weiterhin ist ein Bindemittel vorhanden, das für die Formstabilität der Formulierung im Endprodukt verantwortlich zeichnet.

Ergänzend können der Formulierung geeignete Vitamine, Mineralstoffe und/oder Spurenelemente zugegeben werden.

Durch die auf den Einzelfall abgestimmte optimierte Zusammensetzung der Formulierung ist es möglich, einen definierten geschmacklichen und farblichen Effekt im Produkt zu erzielen.

Die farbgebenden Gewürzkomponenten können aus der Gruppe bekannter Gewürze gewählt werden, bevorzugt werden jedoch stark gefärbte Gewürze eingesetzt, wobei besonders bevorzugt dabei Curcuma-, Paprika- und Spinat-pulver ist.

Die geschmacksgebenden Hilfskomponenten dienen zur geschmacklichen Abrundung der Formulierung. Dies können alle für den Einsatz in Nahrungsmitteln zugelassene Stoffe, wie beispielsweise Gewürze, natürliche und naturidentische Aromen bzw. Extrakte, Bratzwiebelpulver, Brühe, Würze und Kombinationen davon sein.

Ein geschmacksgebender Bestandteil ist Bratzwiebelpulver, insbesondere beim Einsatz von Wurstwaren.

Die geschmacksgebenden Bestandteile tragen maßgeblich dazu bei, dass die erfindungsgemäße Gewürzmischung beim Verzehr einen ausgewogenen, geschmacklich runden Eindruck hinterlässt.

Als Füllstoffhilfskomponente wird Stärke eingesetzt, die durch ihre Hydrierbarkeit für ein angenehmes Mundgefühl beim Verzehr sorgt.

Als Bindemittel dient Alginat. Alginat hat den Vorteil, dass in der Form des Natriumalginats ein wässriges Gel erzeugbar ist, in das die anderen Komponenten der Mischung untermischbar sind. Durch Vertropfen dieser Gesamtmischung in eine CaCl₂-Lösung erstarrt das Alginat zu vernetzten, unlöslichen Ca-Alginatperlen, die die Komponenten der Formulierung sicher einschließen.

Auf die vorstehend geschilderte Weise wird die Gewürzformulierung in eine immobilisierte Form überführt, wodurch die erfindungsgemäßen optischen und geschmacklichen Eigenschaften der Gewürzformulierung erzeugt werden.

Zum Erhalt einer besseren Handhabbarkeit und zum Zweck der Lagerung lassen sich die Gelperlen trocknen und können vakuumverpackt zum Einsatzort transportiert werden. Erfindungsgemäß findet beim Einsatz der Gelperlen im Lebensmittel eine erwünschte Rehydratisierung statt, so dass die Gewürzmischung ihre angestrebten Wirkungen im Produkt entfalten kann.

Als Vitamin-Zusatzstoffe werden bevorzugt die Vitamine A, C, D, E, β-Carotin (Provitamin A) und Kombinationen hiervon eingesetzt.

Die farbgebende Gewürzkomponente macht in der fertigen Formulierung bevorzugt 15 bis 40 Gew.-%, die geschmacksgebende oder die geschmacksgebenden Hilfskomponenten bevorzugt 5 bis 10 Gew.-%, die Stärke als Füllstoff bevorzugt 40 bis 70 Gew.-% und das Alginat als Bindemittel bevorzugt 7 bis 9 Gew.-%, bezogen auf die Trockenmasse aus. Die oben erwähnten Vitamine werden bevorzugt in Mengen von 0,1 bis 1 Gew.-% der Trockenmasse hinzugegeben.

Die Erfindung soll nachstehend anhand drei beispielhafter Gewürzformulierungen näher definiert werden.

### Beispiel 1: Kugelfarbe Rot, Paprika-Geschmack

| | |
|---|---|
| Paprika-Pulver | 19 % |
| Zwiebelpulver | 7 % |
| Kartoffelstärke, nativ: | 64,8 % |
| Ca-Alginat: | 9% |
| β-Carotin | 0,2 % |

### Beispiel 2: Kugelfarbe Gelb, Curcuma-Geschmack

| | |
|---|---|
| Curcuma-Pulver | 38 % |
| Zwiebelpulver | 5,5 % |
| Kartoffelstärke, nativ: | 44,5 % |
| Ca-Alginat | 8 % |
| Vitamin C | 4 % |

### Beispiel 3: Kugelfarbe Grün, Spinat-Geschmack

| | |
|---|---|
| Spinat-Pulver | 24,6 % |
| Zwiebelpulver | 9,7 % |
| Kartoffelstärke, nativ: | 55,8 % |
| Ca-Alginat | 9,6 % |
| Vitamin E | 0,3 % |

(alle Angaben in Gew.-%)

## Patentansprüche

1. Verkapselte Gewürzmischung für Lebensmittel für den Einsatz bei der Herstellung von Fleisch- und Wurstwaren mit einem Alginat-Bindemittel, wobei diese eine bezogen auf die Mischung farbgebende Gewürzkomponente aus der Gruppe stark gefärbter Gewürze, eine geschmacksgebende Hilfskomponente aus einem für den Einsatz in Nahrungsmitteln zugelassenen Stoff wie Gewürze, natürliche und naturidentische Aromen oder Extrakte, Bratzwiebelpulver, Brühe und/oder Würze und Stärke als Füllstoffhilfskomponente aufweist sowie weiterhin die farbgebende Gewürzkomponente 15 bis 40 Gew.-%, die geschmacksgebende Hilfskomponente 5 bis 10 Gew.-%, die Füllstoffhilfskomponente 40 bis 70 Gew.-% und Alginat als Bindemittel 7 bis 9 Gew.-% bezogen auf die Trockenmasse betragen.

2. Gewürzmischung nach Anspruch 1,
**dadurch gekennzeichnet, dass**
als Bindemittel für die Verkapselung ein wässriges Alginat-Gel eingesetzt ist,
in welchem die Komponenten eingemischt sind, wobei durch Vertropfen der Mischung in eine CaCl₂-Lösung vernetzte, unlösliche Ca-Alginatperlen resultieren, die die Komponenten der Mischung einschließen.

3. Gewürzmischung nach einem der vorangegangenen Ansprüche,
**dadurch gekennzeichnet, dass**
der Mischung Vitamine, Mineralstoffe und/oder Spurenelemente in Mengen von 0,1 bis 4 Gew.-% bezogen auf die Trockenmasse zugesetzt sind.

4. Gewürzmischung nach einem der vorangegangenen Ansprüche,
**dadurch gekennzeichnet, dass**
die farbgebende Gewürzkomponente aus natürlichen Farbmitteln, wie Paprika-Pulver, Spinat-Pulver, Curcuma-Pulver oder Spirulina-Pulver besteht.

5. Verwendung einer Gewürzmischung nach einem der vorangegangenen Ansprüche als Nahrungsmittelzutat mit sich einstellender Rehydratisierung im Produkt.

## Claims

1. An encapsulated condiment mixture for foodstuffs for use in the production of meat and sausage products having an alginate binder, wherein, relative to the mixture, same comprises a color-enhancing condiment component from the group of intensely colored condiments, a flavor-enhancing auxiliary component of a substance approved for use in foodstuffs such as spices, natural or nature-identical flavors or extracts, fried onion powder, broth and/or seasoning and starch as an auxiliary filler component, and the color-enhancing condiment component furthermore amounts to 15 to 40% by weight, the flavor-enhancing auxiliary component to 5 to 19% by weight, the auxiliary filler component to 40 to 70% by weight, and alginate as the binder to 7 to 9% by weight relative to the dry matter.

2. The condiment mixture according to claim 1,
**characterized in that**
an aqueous alginate gel into which the components are admixed is used as the binder for the encapsulation, wherein reticulated insoluble Ca alginate pearls encasing the mixture's components result from adding the mixture dropwise into a CaCl₂ solution.

3. The condiment mixture according to any one of the preceding claims, **characterized in that**
vitamins, minerals and/or trace elements are added to the mixture in an amount of 0.1 to 4% by weight relative to the dry matter.

4. The condiment mixture according to any one of the preceding claims, **characterized in that**
the color-enancing condiment component consists of natural colorants such as paprika powder, spinach powder, curcuma powder or spirulina powder.

5. Use of a condiment mixture according to any one of the preceding claims as a food ingredient with rehydration occurring in the product.

## Revendications

1. Mélange de condiments encapsulé pour produits alimentaires pour l'utilisation dans la fabrication de produits de viande et de charcuterie avec un liant alginate, qui présente un composant de condiment colorant eu égard au mélange, issu du groupe des condiments fortement colorés, un composant auxiliaire aromatisant issu d'une matière admise pour l'utilisation dans les denrées alimentaires telle que des condiments, des arômes ou extraits naturels et identiques au naturel, de la poudre d'oignons frits, du bouillon et/ou de l'épice et de l'amidon comme composant auxiliaire de remplissage, et le composant de condiment colorant étant en outre de 15 à 40% en poids, le composant auxiliaire aromatisant de 5 à 10% en poids, le composant auxiliaire de remplissage de 40 à 70% en poids et l'alginate comme liant de 7 à 9% en poids par rapport à la masse sèche.

2. Mélange de condiments selon la revendication 1,
**caractérisé en ce que**,
comme liant pour l'encapsulage, on utilise un gel d'alginate aqueux dans lequel les composants sont immiscés, des perles d'alginate au Ca insolubles réticulées qui renferment les composants du mélange résultant de l'introduction de gouttelettes du mélange dans une solution de CaCl₂.

3. Mélange de condiments selon l'une des revendications précédentes, **caractérisé en ce que**
des vitamines, des minéraux et/ou des oligo-éléments sont adjoints au mélange dans des quantités de 0,1 à 4% en poids par rapport à la masse sèche.

4. Mélange de condiments selon l'une des revendications précédentes, **caractérisé en ce que**
le composant de condiment colorant se compose de colorants naturels, tels que la poudre de piment, la poudre d'épinard, la poudre de curcuma ou la poudre de spiruline.

5. Utilisation d'un mélange de condiments selon l'une des revendications précédentes comme ingrédient de denrée alimentaire à réhydratation autorégulante dans le produit.
